# EUROPÄISCHE PATENTANMELDUNG

(11) **EP 4 275 843 A1**
(43) Veröffentlichungstag der Anmeldung: **15.11.2023**
(21) Anmeldenummer: 23172707.4
(22) Anmeldetag: 11.05.2023
(51) Int. Cl.: B25F 5/00

(54) **STEUERUNG EINES ELEKTROWERKZEUGS UND EINER SEPARATEN BELEUCHTUNGSVORRICHTUNG**

(30) Priorität: 13.05.2022 DE 102022112034
(71) Anmelder: Einhell Germany AG, 94405 Landau / Isar (DE)
(72) Erfinder: MAYR, Stefan, 94405 Landau/Isar (DE)
(74) Vertreter: Hofstetter, Schurack & Partner

(57) **Zusammenfassung**

Ein Steuerungssystem (2) für ein Elektrowerkzeug (3) und eine separat dazu angeordnete Beleuchtungsvorrichtung (4) weist einen ersten Steuerschaltkreis (7) sowie einen Sensor (13) für das Elektrowerkzeug (3) und einen zweiten Steuerschaltkreis (8) für die Beleuchtungsvorrichtung (4) auf. Der Sensor (13) ist dazu eingerichtet, abhängig von einem Wert eines Betriebsparameters des Elektrowerkzeugs (3) ein Sensorsignal zu erzeugen. Der erste Steuerschaltkreis (7) ist dazu eingerichtet, abhängig von dem Sensorsignal eine Information betreffend den Wert des Betriebsparameters an den zweiten Steuerschaltkreis (8) zu übermitteln. Der zweite Steuerschaltkreis (8) ist dazu eingerichtet, eine Lichtquelle (15) der Beleuchtungsvorrichtung (4) abhängig von der übermittelten Information dazu anzusteuern, einen oder mehrere Lichtimpulse zu emittieren, wobei ein Pulsparameter betreffend eine Impulsdauer der Lichtimpulse und/oder eine Impulsamplitude der Lichtimpulse und/oder eine Frequenz der Lichtimpulse und/oder einen Tastgrad der Lichtimpulse von dem Wert des Betriebsparameters abhängt und/oder Licht zu emittieren, dessen Lichtintensität von dem Wert des Betriebsparameters abhängt.

## Beschreibung

Die vorliegende Erfindung betrifft ein Steuerungssystem für ein Elektrowerkzeug und eine separat zu dem Elektrowerkzeug angeordnete Beleuchtungsvorrichtung, ein Elektrowerkzeugsystem aufweisend ein solches Steuerungssystem, sowie ein Verfahren zum Betreiben eines Elektrowerkzeugsystems.

Bei Elektrowerkzeugen, insbesondere Elektrowerkzeugen zum Trennen, Schleifen oder Bohren, kann es zu einer starken Belastung oder Überlastung des elektrischen Verbrauchers des Elektrowerkzeugs, insbesondere eines Elektromotors des Elektrowerkzeugs, und/oder zu einer starken Belastung oder Überlastung der Elektronik kommen, wenn dem elektrischen Verbraucher durch das zu bearbeitende Werkstück ein sehr hoher Widerstand entgegengesetzt wird. Bei akkubetriebenen Elektrowerkzeugen kann eine solche Überlastung auch zur Beschädigung von Akkumulatorzellen führen. Dies kann insbesondere relevant sein, wenn ein Benutzer selbst für einen Vorschub des Elektrowerkzeugs bezüglich des Werkstücks sorgt oder jedenfalls teilweise ein solcher manueller Vorschub vorgesehen ist, wie etwa bei Handkreissägen, Winkelschleifern, Bohrmaschinen oder sonstigen Elektrowerkzeugen zum Trennen, Schleifen oder Bohren. Außerdem kann es möglich sein, insbesondere wenn das Elektrogerät mit einem Akkupack, beispielsweise Wechsel-Akkupack, betreibbar ist, dass eine maximale Stromabgabe des Akkupacks höher ist, als ein maximal für den elektrischen Verbraucher zulässiger oder tolerierbarer Strom, sodass der elektrische Verbraucher im Zweifelsfall beschädigt werden könnte.

Es ist bekannt, die Stromaufnahme und/oder Temperatur des elektrischen Verbrauchers eines Elektrowerkzeugs zu überwachen und das Elektrowerkzeug gegebenenfalls abzuschalten, wenn die Stromaufnahme und/oder Temperatur einen jeweiligen zulässigen Grenzwert überschreitet. Dies ist jedoch zum einen nachteilhaft hinsichtlich des Benutzerkomforts, da der Benutzer in seiner Arbeit unterbrochen wird. Darüber hinaus führt die Unterbrechung des Betriebs des Elektrowerkzeugs gegebenenfalls zu Qualitätseinbußen bei der Bearbeitung des Werkstücks, insbesondere wenn Schneiden zum Stillstand gebracht werden. Außerdem muss bei einem solchen Ansatz der zulässige Grenzwert für den Strom relativ konservativ ausgelegt werden. Ein Nachteil der temperaturabhängigen Abschaltung kann es sein, dass es relativ lange dauern kann, bis der elektrische Verbraucher ausreichend abgekühlt ist.

Es ist eine Aufgabe der vorliegenden Erfindung, eine Möglichkeit zum Schutz des Elektrowerkzeugs oder seiner Komponenten vor Überlastung anzugeben, durch die ein zwangsweises Abschalten des Elektrowerkzeugs möglichst vermieden wird.

Diese Aufgabe wird gelöst durch den jeweiligen Gegenstand der unabhängigen Ansprüche. Vorteilhafte Weiterbildungen und bevorzugte Ausführungsformen sind Gegenstand der abhängigen Ansprüche.

Die Erfindung beruht auf dem Gedanken, das Elektrowerkzeug derart mit einer Beleuchtungsvorrichtung, die separat zu dem Elektrowerkzeug angeordnet ist, zu koppeln, dass abhängig von einem sensorisch bestimmten Wert eines Betriebsparameters des Elektrowerkzeugs Licht oder Lichtimpulse mittels der Beleuchtungsvorrichtung ausgegeben werden, um den Benutzer zu warnen beziehungsweise zu informieren, wenn der entsprechende Wert des Betriebsparameters dies nahelegt.

Gemäß einem Aspekt der Erfindung wird ein Steuerungssystem für ein Elektrowerkzeugsystem, das Elektrowerkzeugsystem aufweisend ein Elektrowerkzeug und eine separat zu dem Elektrowerkzeug angeordnete Beleuchtungsvorrichtung, angegeben. Das Steuerungssystem weist einen ersten Steuerschaltkreis für das Elektrowerkzeug auf und einen zweiten Steuerschaltkreis für die Beleuchtungsvorrichtung. Das Steuerungssystem weist einen Sensor für das Elektrowerkzeug auf, der dementsprechend angeordnet und dazu eingerichtet ist, abhängig von einem Wert eines Betriebsparameters des Elektrowerkzeugs ein Sensorsignal zu erzeugen, insbesondere den Wert des Betriebsparameters zu bestimmen oder zu messen und abhängig davon das Sensorsignal zu erzeugen. Der erste Steuerschaltkreis ist drahtlos oder drahtgebunden mit dem Sensor verbunden und dazu eingerichtet, das Sensorsignal von dem Sensor zu erhalten und abhängig von dem Sensorsignal eine Information betreffend den Wert des Betriebsparameters direkt oder indirekt an den zweiten Steuerschaltkreis zu übermitteln, insbesondere drahtlos zu übermitteln.

Der zweite Steuerschaltkreis ist in einer ersten Alternative dazu eingerichtet, das Informationssignal zu erhalten und eine Lichtquelle der Beleuchtungsvorrichtung abhängig von der übermittelten Information dazu anzusteuern, eine Vielzahl von Lichtimpulsen zu erzeugen und zu emittieren. Dabei hängt ein Pulsparameter betreffend eine Impulsdauer der Vielzahl von Lichtimpulsen und/oder eine Impulsamplitude der Vielzahl von Lichtimpulsen und/oder eine Frequenz der Vielzahl von Lichtimpulsen und/oder einen Tastgrad der Vielzahl von Lichtimpulsen von dem Wert des Betriebsparameters ab. In einer zweiten Alternative ist der zweite Steuerschaltkreis dazu eingerichtet, das Informationssignal zu erhalten und die Lichtquelle abhängig von der übermittelten Information dazu anzusteuern, einen Lichtimpuls zu emittieren, wobei ein Pulsparameter betreffend eine Impulsdauer und/oder eine Impulsamplitude des Lichtimpulses von dem Wert des Betriebsparameters abhängt. In einer dritten Alternative ist der zweite Steuerschaltkreis dazu eingerichtet, das Informationssignal zu erhalten und die Lichtquelle abhängig von der übermittelten Information dazu anzusteuern, Licht zu emittieren, wobei eine Lichtintensität des emittierten Lichts von dem Wert des Betriebsparameters abhängt.

Dass der Pulsparameter die Impulsdauer, die Impulsamplitude die Frequenz und/oder den Tastgrad betrifft, kann derart verstanden werden, dass der Impulsparameter gleich der Impulsdauer, der Frequenz oder dem Tastgrad ist oder einer davon abgeleiteten Größe entspricht.

Die Vielzahl von Lichtimpulsen ist beispielsweise eine Abfolge voneinander getrennter und insbesondere durch einen menschlichen Beobachter getrennt wahrnehmbarer Lichtimpulse, die beispielsweise periodisch mit einer entsprechenden Periodendauer emittiert werden. Zwei benachbarte aufeinanderfolgende Lichtimpulse sind insbesondere durch eine Aus-Zeit, wohingegen die einzelnen Lichtimpulse während einer entsprechenden An-Zeit emittiert werden. Wenn jede Periode genau einen Lichtimpuls enthält, so ergibt sich die Periodendauer aus der Summe der An-Zeit und der Aus-Zeit. Die Impulsdauer der Vielzahl von Lichtimpulsen kann beispielsweise der Dauer der An-Zeit entsprechen. Die Frequenz der Vielzahl von Lichtimpulsen kann der inversen Periodendauer entsprechen. Der Tastgrad der Vielzahl von Lichtimpulsen kann beispielsweise einem Verhältnis der Impulsdauer zu der Periodendauer entsprechen, also einem Quotienten aus der Impulsdauer und der Periodendauer oder mit anderen Worten einem Produkt aus der Impulsdauer und der Frequenz. Es können jedoch auch andere, insbesondere gleichwertige, Größen als Pulsparameter verwendet werden, beispielsweise ein Verhältnis von An-Zeit zur Aus-Zeit oder dergleichen. Ein solches Verhältnis wäre nicht identisch zum Tastgrad wie oben definiert, betrifft aber den Tastgrad.

Die Lichtimpulse sind insbesondere separat voneinander für einen Benutzer oder Beobachter wahrnehmbar. Dementsprechend ist die Frequenz der Vielzahl von Lichtimpulsen nicht beliebig hoch, da bei sehr hohen Frequenzen die Lichtimpulse nicht mehr separat wahrnehmbar sein könnten. Beispielsweise kann die Frequenz kleiner als 50 Hz sein, vorzugsweise kleiner oder gleich 10 Hz. Die Frequenz kann beispielsweise größer oder gleich 0,1 Hz sein, vorzugsweise größer oder gleich 1 Hz. Beispielsweise kann die Frequenz in dem Bereich 1 Hz bis 5 Hz liegen.

Unabhängig von dem Pulsparameter, insbesondere der Frequenz oder dem Tastgrad der Vielzahl von Lichtimpulsen, kann die Lichtquelle durch den zweiten Steuerungsschaltkreis beispielsweise gemäß einer Pulsweitenmodulation gesteuert werden, um die Helligkeit der emittierten Lichtimpulse zu steuern oder zu regeln. Damit einhergehende Pulse sind jedoch nicht unter der Vielzahl von Lichtimpulsen zu verstehen, da diese gegebenenfalls nicht für einen menschlichen Beobachter wahrnehmbar wären als getrennte Lichtimpulse und in anderen Frequenzbereichen wie den genannten vorliegen würden.

Die Lichtintensität kann beispielsweise abhängig von dem Wert des Betriebsparameters mittels Pulsweitenmodulation gesteuert werden.

Der Betriebsparameter kann beispielsweise einem Betriebsstrom des elektrischen Verbrauchers entsprechen, beispielsweise einem Strom, den eine Energiequelle, insbesondere ein Akkupack, während des Betriebs des Elektrowerkzeugs an den elektrischen Verbraucher, insbesondere den Elektromotor, abgibt. Je nach Ausführung des Elektrowerkzeugs und des Verbrauchers können jedoch auch andere Betriebsparameter verwendet werden, wie etwa eine Betriebsspannung, beispielsweise eine Ausgangsspannung des Akkupacks, ein Ladezustand des Akkupacks, eine Temperatur, beispielsweise eine Temperatur einer elektronischen Komponente des Elektrowerkzeugs oder des elektrischen Verbrauchers, ein Fluidfluss eines Betriebsmittels, also insbesondere eine Fluidflussrate oder eine Fluidflussgeschwindigkeit, oder eine Kombination aus den genannten Größen, etwa ein Produkt aus Fluiddruck und Fluidflussgeschwindigkeit, eine elektrische Leistung oder dergleichen. Der Betriebsparameter kann auch eine abgeleitete Größe sein, etwa ein Drehmoment, das beispielsweise aus Signaturen abgeleitet werden kann, die im Betriebsstrom oder der Ausgangsspannung auftreten, sogenannte Ripples.

Die Kommunikation zwischen dem Elektrowerkzeug, insbesondere dem ersten Steuerschaltkreis, und der Beleuchtungsvorrichtung, insbesondere dem zweiten Steuerschaltkreis, kann grundsätzlich drahtlos oder drahtgebunden erfolgen. Vorzugsweise erfolgt die Kommunikation drahtlos, beispielsweise über Funk. Insbesondere kann das Steuerungssystem eine mit dem ersten Steuerschaltkreis verbundene erste Kommunikationsschnittstelle für das Elektrowerkzeug aufweisen und eine mit dem zweiten Steuerschaltkreis verbundene zweite Kommunikationsschnittstelle für die Beleuchtungsvorrichtung.

Die Übermittlung der Information kann dann direkt oder indirekt von der ersten Kommunikationsschnittstelle an die zweite Kommunikationsschnittstelle erfolgen. Unter einer direkten Übermittlung kann dabei verstanden werden, dass mittels der ersten Kommunikationsschnittstelle ein Funksignal oder ein drahtgebundenes Signal erzeugt wird und direkt ohne Zwischenschaltung einer weiteren Stelle an die zweite Kommunikationsschnittstelle und damit an den zweiten Steuerschaltkreis überträgt. Unter einer indirekten Kommunikation beziehungsweise einer indirekten Übertragung oder Übermittlung der Information kann verstanden werden, dass mittels der Kommunikationsschnittstelle zunächst das Signal an eine weitere Stelle, beispielsweise eine externe Recheneinheit, übermittelt wird und von dieser dann an die zweite Kommunikationsschnittstelle und somit den zweiten Steuerungsschaltkreis übermittelt wird.

Insbesondere können die bei der Übermittlung der Information verwendeten Signale zur Übermittlung der Information auch verarbeitet oder verändert werden, die Information bleibt dabei jedoch enthalten.

Die drahtlose Übermittlung der Information von dem ersten Steuerungsschaltkreis beziehungsweise der ersten Kommunikationsschnittstelle an den zweiten Steuerungsschaltkreis beziehungsweise die zweite Kommunikationsschnittstelle des kann beispielsweise gemäß einem GSM-Standard, einem auf dem GSM-Standard basierenden Standard, Edge, UMTS, HSDPA, LTE oder einem sonstigen Mobilfunkstandard realisiert sein. Die Übermittlung kann auch beispielsweise basierend auf LTE-M, LTE-CAT-M1 oder einem sonstigen Standard erfolgen. Die Übermittlung kann auch gemäß einem Schmalband-Internet-der-Dinge-Standard, NB-IOT (Englisch: "Narrow Band Internet of Things"), oder einem sonstigen Niedrigenergie-Weitverkehr-Netzwerk, LPWAN (Englisch: "Low Power White Area Network") erfolgen. Die Übermittlung kann auch gemäß einem sonstigen Funkstandard erfolgen, etwa gemäß Bluetooth oder WLAN.

Die Beleuchtungsvorrichtung beinhaltet eine oder mehrere Beleuchtungseinheiten, wobei eine Beleuchtungseinheit beispielsweise durch eine Leuchte gegeben ist. Wenn die Beleuchtungsvorrichtung zwei oder mehr Beleuchtungseinheiten beinhaltet, können diese beispielsweise individuell und unabhängig voneinander steuerbar sein oder gemeinsam steuerbar sein. Die Beleuchtungseinheiten können räumlich verteilt sein oder an einem gemeinsamen Ort angeordnet sein, beispielsweise mechanisch zu einer Einheit gekoppelt sein. Die Beleuchtungsvorrichtung kann in verschiedenen Ausführungsformen insbesondere aus einer Beleuchtungseinheit bestehen. Das Beleuchtungssystem ist insbesondere nicht Teil des Elektrowerkzeugs und das Elektrowerkzeug ist nicht Teil des Beleuchtungssystems. Insbesondere ist das Elektrowerkzeug nicht physisch mit dem Beleuchtungssystem verbunden.

Das Elektrowerkzeug kann beispielsweise wenigstens einen Akkupack aufweisen, der dazu ausgelegt und eingerichtet ist, den elektrischen Verbraucher, insbesondere den Elektromotor, des Elektrowerkzeugs mit Energie zu versorgen. Der erste Steuerschaltkreis kann dann Teil des wenigstens einen Akkupacks sein oder in einem anderen Teil des Elektrowerkzeugs angeordnet sein. Es ist auch möglich, dass nur ein Teil des ersten Steuerschaltkreises von dem Akkupack beinhaltet ist und ein weiterer Teil des Steuerschaltkreises in dem anderen Teil des Elektrowerkzeugs.

Das Akkupack kann lösbar, insbesondere zerstörungsfrei lösbar, mit einem Gehäuse des Elektrowerkzeugs verbunden werden, beispielsweise über eine Rastverbindung, eine Steckverbindung und/oder eine Klemmverbindung. Insbesondere kann die mechanische Verbindung des Akkupacks mit dem Gehäuse des Elektrowerkzeugs als formschlüssige und/oder kraftschlüssige Verbindung ausgestaltet sein, ohne dass eine stoffschlüssige Verbindung vorliegt. Mit anderen Worten kann die mechanische Verbindung des Akkupacks mit dem Gehäuse des Elektrowerkzeugs gelöst werden, ohne dass eine stoffschlüssige Verbindung zu lösen ist. Vorzugsweise kann die mechanische Verbindung bestimmungsgemäß manuell ohne den Einsatz sonstiger Werkzeuge gelöst werden. Mit anderen Worten ist das Akkupack als Wechsel-Akkupack, insbesondere System-Akkupack ausgestaltet. Zur elektrischen und mechanischen Verbindung können die Gehäuse des Akkupacks und des Elektrowerkzeugs jeweilige Schnittstellen aufweisen.

Eine elektrische Verbindung der wenigstens einen Akkumulatorzelle mit dem Elektrowerkzeug, insbesondere dem elektrischen Verbraucher, kann beispielsweise über einen oder mehrere lösbare elektrische Kontakte, beispielsweise Klemmkontakte oder Steckkontakte, insbesondere sogenannte Tulpenkontakte oder Schwertkontakte, erfolgen. Beispielsweise können an den Schnittstellen der entsprechenden Gehäuse jeweils zueinander kompatible Stecker oder Buchsen beziehungsweise Aufnahmen oder dergleichen vorgesehen sein, um die elektrische Verbindung des Akkupacks mit dem Elektrowerkzeug zu erzielen.

Dies gilt analog auch für die Beleuchtungsvorrichtung, insbesondere die Lichtquelle, die ebenfalls mit wenigstens einem Akkupack mit Energie versorgt werden kann. Auch hier kann der zweite Steuerschaltkreis von dem entsprechenden Akkupack der Beleuchtungsvorrichtung enthalten sein oder teilweise enthalten sein oder von einer anderen Komponente der Beleuchtungsvorrichtung.

Durch das erfindungsgemäße Steuerungssystem kann anhand des emittierten Lichtimpulses beziehungsweise der emittierten Lichtimpulse oder der Lichtintensität abhängig von dem Wert des Betriebsparameters ein Benutzer des Elektrowerkzeugs, der sich in der Umgebung der Beleuchtungsvorrichtung befindet, unmittelbar auf den Wert des Betriebsparameters, beispielsweise im Verhältnis zu einem oder mehreren Grenzwerten, hingewiesen werden oder entsprechend informiert beziehungsweise gewarnt werden.

Dabei nutzt die Erfindung mit Vorteil den visuellen Informationskanal, da dieser nicht durch Eigengeräusche des Elektrowerkzeugs oder Geräusche durch die Wechselwirkung mit dem Werkstück verdeckt oder überlagert werden kann oder durch entsprechende Vibrationen des Werkzeugs, wie dies für akustische Rückmeldungen beziehungsweise haptische Rückmeldungen über das Elektrowerkzeug der Fall wäre. Dabei wird ferner ausgenutzt, dass durch die Erzeugung von Lichtimpulsen oder Licht mit variabler Lichtintensität eine dynamische Ansprache der menschlichen Wahrnehmung erzielt wird, die gezielt durch den entsprechenden Pulsparameter modifiziert werden kann, sodass unmittelbar auf Veränderungen hingewiesen werden kann. So können beispielsweise die Lichtintensität, die Frequenz, die Impulsdauer oder der Tastgrad dynamisch verändert werden, je nachdem, wie groß der Wert des Betriebsparameters bezüglich eines oder mehrerer vorgegebener Grenzwerte ist. Dem Benutzer kann auf diese Weise mit einem einfachen visuellen Kommunikationskanal eine relativ hohe Informationsdichte zur Verfügung gestellt werden, die dieser intuitiv erfassen und gegebenenfalls darauf reagieren kann.

Dabei ist es insbesondere vorteilhaft, die separat zu dem Elektrowerkzeug angeordnete Beleuchtungsvorrichtung einzusetzen, insbesondere einen Baustrahler oder eine sonstige Raum- oder Umgebungsbeleuchtung, da auf diese Weise das gesamte Arbeitsumfeld des Benutzers gezielt beeinflusst werden kann. Der Benutzer nimmt die Lichtimpulse oder das Licht daher wahr, auch wenn er seine Aufmerksamkeit nicht unmittelbar auf die Lichtquelle richtet oder dergleichen. Dies bietet entsprechende Vorteile hinsichtlich der Zuverlässigkeit der Warnung oder Information des Benutzers, insbesondere im Vergleich zu Displays, Warnleuchten oder dergleichen, die direkt am Elektrowerkzeug angeordnet wären.

Durch die visuelle Information beziehungsweise die visuelle Warnung anhand der Lichtimpulse oder des Lichts kann im Idealfall auf eine Abschaltung des Elektrowerkzeugs verzichtet werden, wenn sich der Wert des Betriebsparameters einem kritischen Wert nähert, da dementsprechend frühzeitig und vorzugsweise dynamisch auf die Situation und den Wert des Betriebsparameters hingewiesen werden kann. Mit anderen Worten realisiert die Erfindung eine proaktive Strategie zur Vermeidung kritischer Zustände, im Gegensatz zu einer reaktiven Strategie etwa durch konsequentes Abschalten der Stromversorgung oder Begrenzen der Stromversorgung.

Somit kann nicht nur der Benutzerkomfort bei der Benutzung des Elektrowerkzeugs verbessert werden, sondern auch Qualitätseinbußen bei den Arbeitsergebnissen können vermieden werden, da das Werkzeug möglichst nicht zwischendurch gestoppt wird und wieder anlaufen muss, was zu nicht optimalen Übergängen auf der Werkstückoberfläche und so weiter führen kann, je nach Art des Elektrowerkzeugs. Im Vergleich zu einer temperaturabhängigen Abschaltung kann eine erzwungene Abkühlpause des elektrischen Verbrauchers vermieden werden.

Zusätzlich zu der erfindungsgemäßen Ansteuerung der Beleuchtungsvorrichtung abhängig von der übermittelten Information, kann in manchen Ausführungsformen dennoch eine stromabhängige und/oder temperaturabhängige Abschaltung des elektrischen Verbrauchers vorgesehen sein, beispielsweise wenn der Benutzer auf die Ansteuerung der Beleuchtungsvorrichtung nicht oder nicht ausreichend reagiert.

Zudem wird auch der elektrische Verbraucher zuverlässig geschützt, da das Erreichen des kritischen Zustands möglichst vermieden werden kann. Insbesondere kann eine Überlastung des Elektromotors durch zu hohen Widerstand aufgrund zu hohen Vorschubs durch den Benutzer vermieden werden ebenso wie eine Überlastung der Akkumulatorzellen im Falle eines akkubetriebenen Elektrowerkzeugs und/oder der Elektronik des Akkupacks beziehungsweise des Elektrowerkzeugs.

Bei dem Elektrowerkzeug, das auch ein Gartenwerkzeug sein kann, handelt es sich beispielsweise um ein Elektrowerkzeug zum Sägen, zum Trennen oder zum Bohren. Beispielsweise kann es sich also um eine Säge handeln, etwa eine Stichsäge, eine Kappsäge, eine Tischkreissäge, eine Handkreissäge, eine Kettensäge, einen Hochentaster, eine Bandsäge und so weiter handeln. Es kann sich auch um eine Fräse, einen Winkelschleifer, einen Steintrenner, einen Fliesenschneider, einen Hobel, einen Dickenhobel, eine Drechselbank und so weiter handeln. Darüber hinaus kann es sich um eine Bohrmaschine, eine Schlagbohrmaschine, einen Bohrhammer und so weiter handeln. Diese Auflistung ist lediglich beispielhaft und nicht erschöpfend zu verstehen und beschränkt die Anwendbarkeit der Erfindung nicht grundsätzlich.

Besonders bei Elektrowerkzeugen zum Trennen, Schleifen oder Bohren ist jedoch üblicherweise ein wenigstens teilweise manueller Vorschub durch einen Benutzer zu leisten. Mit anderen Worten hat der Benutzer gegebenenfalls unmittelbaren Einfluss auf die Belastung des Elektrowerkzeugs, insbesondere eines elektrischen Verbrauchers, beispielsweise eines Elektromotors, durch die Beeinflussung des Vorschubs. Im Extremfall kann der Benutzer durch entsprechendes Einwirken auf das Elektrowerkzeug beispielsweise sogar einen Stillstand des Elektromotors provozieren. Besonders bei solchen Elektrowerkzeugen kann die Erfindung daher vorteilhaft eingesetzt werden.

Gemäß zumindest einer Ausführungsform des Steuerungssystems ist der erste Steuerschaltkreis dazu eingerichtet, die Information über die erste Kommunikationsschnittstelle und die zweite Kommunikationsschnittstelle direkt an den zweiten Steuerschaltkreis zu übermitteln.

In alternativen Ausführungsformen weist das Steuerungssystem eine externe Recheneinheit auf und der erste Steuerschaltkreis ist dazu eingerichtet, die Information über die erste Kommunikationsschnittstelle an die erste Recheneinheit zu übermitteln und die externe Recheneinheit ist dazu eingerichtet, die Information über die zweite Kommunikationsschnittstelle an den zweiten Steuerschaltkreis zu übermitteln, insbesondere um die Information indirekt von dem ersten Steuerschaltkreis zu dem zweiten Steuerschaltkreis zu übermitteln.

Die externe Recheneinheit ist weder Teil des Elektrowerkzeugs noch der Beleuchtungsvorrichtung, ist also extern sowohl zum Elektrowerkzeug als auch zur Beleuchtungsvorrichtung angeordnet. Bei der externen Recheneinheit kann es sich beispielsweise um eine Recheneinheit eines Servercomputersystems oder eines Cloudcomputersystems oder dergleichen handeln.

Gemäß zumindest einer Ausführungsform ist der Sensor als Stromsensor ausgestaltet und dazu eingerichtet, das Sensorsignal abhängig von einem Betriebsstrom zum Betrieb des elektrischen Verbrauchers, insbesondere des Elektromotors, des Elektrowerkzeugs zu erzeugen.

Bei einem akkubetriebenen Elektrowerkzeug kann es sich bei dem Betriebsstrom beispielsweise um einen Strom handeln, der von dem Akkupack an den elektrischen Verbraucher geliefert wird.

Gemäß zumindest einer Ausführungsform weist das Steuerungssystem ein erstes Akkupack zur Energieversorgung des Elektrowerkzeugs, insbesondere des elektrischen Verbrauchers, beispielsweise des Elektromotors, auf, wobei das erste Akkupack die erste Steuereinheit und insbesondere die erste Kommunikationsschnittstelle enthält.

Alternativ oder zusätzlich weist das Steuerungssystem ein zweites Akkupack zur Energieversorgung der Beleuchtungsvorrichtung, insbesondere der Lichtquelle, auf, wobei das zweite Akkupack die zweite Steuereinheit und insbesondere die zweite Kommunikationsschnittstelle enthält.

Gemäß zumindest einer Ausführungsform ist der erste Schaltkreis dazu eingerichtet, die Information derart zu erzeugen, dass die Information betreffend den Wert des Betriebsparameters den Wert des Betriebsparameters beinhaltet. Der zweite Steuerschaltkreis ist dazu eingerichtet, den Pulsparameter und/oder die Lichtintensität abhängig von dem Wert des Betriebsparameters zu bestimmen und die Vielzahl von Lichtimpulsen gemäß dem so bestimmten Pulsparameter zu erzeugen und zu emittieren beziehungsweise das Licht gemäß der so bestimmten Lichtintensität zu erzeugen und zu emittieren.

Gemäß zumindest einer Ausführungsform ist der zweite Steuerschaltkreis dazu eingerichtet, den Wert des Betriebsparameters mit wenigstens einem vorgegebenen Grenzwert zu vergleichen und den Pulsparameter und/oder die Lichtintensität abhängig von einem Ergebnis des Vergleichs zu bestimmen und die Vielzahl von Lichtimpulsen gemäß dem so bestimmten Pulsparameter zu erzeugen und zu emittieren beziehungsweise das Licht gemäß der so bestimmten Lichtintensität zu erzeugen und zu emittieren.

Gemäß zumindest einer Ausführungsform ist der erste Steuerschaltkreis dazu eingerichtet, den Wert des Betriebsparameters mit dem wenigstens einen vorgegebenen Grenzwert zu vergleichen und die Information derart zu erzeugen, dass die Information betreffend den Wert des Betriebsparameters ein Ergebnis des Vergleichs beinhaltet. Das Ergebnis des Vergleichs betrifft den Wert des Betriebsparameters notwendigerweise. Der zweite Steuerschaltkreis ist dazu eingerichtet, den Pulsparameter und/oder die Lichtintensität abhängig von dem Ergebnis des Vergleichs zu bestimmen und die Vielzahl von Lichtimpulsen gemäß dem so bestimmten Pulsparameter zu emittieren beziehungsweise das Licht gemäß der so bestimmten Lichtintensität zu erzeugen und zu emittieren.

Beispielsweise kann ein erster Grenzwert des wenigstens einen Grenzwerts einen zulässigen Betriebsbereich definieren. Beispielsweise kann der zulässige Betriebsbereich einem Wert des Betriebsparameters kleiner oder gleich dem ersten Grenzwert entsprechen. In diesem Fall kann der Pulsparameter beispielsweise derart bestimmt werden, dass die Frequenz der Vielzahl von Lichtimpulsen umso höher ist, je kleiner der Abstand des Werts des Betriebsparameters von dem ersten Grenzwert ist. Alternativ oder zusätzlich kann beispielsweise die Lichtintensität umso geringer sein, je kleiner der Abstand des Werts des Betriebsparameters von dem ersten Grenzwert ist. Die Variation der Frequenz und/oder der Lichtintensität kann dabei kontinuierlich oder in diskreten Schritten, insbesondere in zwei oder mehr diskreten Schritten, erfolgen.

Analog kann auch der Tastgrad dynamisch verändert werden, je näher der Wert des Betriebsparameters an den ersten Grenzwert kommt.

Es kann auch ein weiterer erster Grenzwert vorgegeben sein, wobei der erste Grenzwert und der weitere erste Grenzwert zwei oder mehr zulässige Betriebsbereiche definieren. Beispielsweise kann ein erster zulässiger Betriebsbereich vorliegen, wenn der Wert des Betriebsparameters kleiner oder gleich dem weiteren ersten Grenzwert ist und ein zweiter zulässiger Betriebsbereich kann gegeben sein, wenn der Wert des Betriebsparameters größer ist als der weitere erste Grenzwert, aber kleiner oder gleich dem ersten Grenzwert, der in diesem Fall größer ist als der weitere erste Grenzwert. Ist der Wert des Betriebsparameters kleiner oder gleich dem weiteren ersten Grenzwert, so kann der Pulsparameter einem ersten Pulsparameter entsprechen und ist der Wert des Betriebsparameters kleiner oder gleich dem ersten Grenzwert und größer als der weitere erste Grenzwert, so kann der Pulsparameter einem zweiten Pulsparameterwert entsprechen. Der erste Wert des Pulsparameters kann einer ersten Frequenz entsprechen und der zweite Wert des Pulsparameters einer zweiten Frequenz, die größer ist als die erste Frequenz oder dergleichen. Alternativ oder zusätzlich kann, wenn der Wert des Betriebsparameters kleiner oder gleich dem weiteren ersten Grenzwert ist, die Lichtintensität einem ersten Intensitätswert entsprechen und wenn der Wert des Betriebsparameters kleiner oder gleich dem ersten Grenzwert und größer als der weitere erste Grenzwert, kann die Lichtintensität einem zweiten Intensitätswert entsprechen, der beispielsweise kleiner ist, als der erste Intensitätswert.

Es kann jedoch auch ein zweiter Grenzwert vorgesehen sein, der einen unzulässigen Betriebsbereich definiert. Ist der Wert des Betriebsparameters beispielsweise größer oder gleich dem zweiten Grenzwert, so kann der unzulässige Betriebsbereich gegeben sein. In diesem Fall kann der Pulsparameter beispielsweise auch abhängig von einer Differenz zwischen dem zweiten Grenzwert und dem Wert des Betriebsparameters bestimmt werden, wenn der Wert des Betriebsparameters größer ist als der zweite Grenzwert. Beispielsweise kann die Frequenz der Vielzahl von Lichtimpulsen umso höher sein, je weiter sich der Wert des Betriebsparameters von dem zweiten Grenzwert entfernt. Alternativ oder zusätzlich kann die Lichtintensität abhängig von der Differenz zwischen dem zweiten Grenzwert und dem Wert des Betriebsparameters bestimmt werden, wenn der Wert des Betriebsparameters größer ist als der zweite Grenzwert.

Beispielsweise kann die Lichtintensität umso geringer sein, je weiter sich der Wert des Betriebsparameters von dem zweiten Grenzwert entfernt.

Gemäß zumindest einer Ausführungsform ist der erste Steuerschaltkreis dazu eingerichtet, den Pulsparameter und/oder die Lichtintensität abhängig von dem Wert für den Betriebsparameter zu bestimmen und die Information derart zu erzeugen, dass die Information betreffend den Wert des Betriebsparameters den Pulsparameter und/oder die Lichtintensität enthält und der zweite Steuerschaltkreis ist dazu eingerichtet, die Lichtquelle gemäß dem Pulsparameter und/oder der Lichtintensität anzusteuern.

Gemäß einem weiteren Aspekt der Erfindung wird ein Elektrowerkzeugsystem aufweisend ein Elektrowerkzeug, eine separat zu dem Elektrowerkzeug angeordnete Beleuchtungsvorrichtung und ein erfindungsgemäßes Steuerungssystem angegeben. Dabei enthält das Elektrowerkzeug insbesondere den ersten Steuerschaltkreis und den Sensor sowie gegebenenfalls die erste Kommunikationsschnittstelle. Die Beleuchtungsvorrichtung enthält den zweiten Steuerschaltkreis, die Lichtquelle und gegebenenfalls die zweite Kommunikationsschnittstelle.

Gemäß zumindest einer Ausführungsform des Elektrowerkzeugsystems ist die Beleuchtungsvorrichtung als Beleuchtungsvorrichtung zur Raumbeleuchtung oder zur Außenbeleuchtung ausgestaltet.

Die Beleuchtungsvorrichtung kann also insbesondere als Baustrahler, Taschenlampe, Stehleuchte, Tischleuchte, Deckenleuchte, Flutlichtstrahler oder dergleichen ausgestaltet sein.

Gemäß zumindest einer Ausführungsform des Elektrowerkzeugsystems ist das Elektrowerkzeug als Elektrowerkzeug zum Trennen, Schleifen oder Bohren ausgestaltet.

Gemäß zumindest einer Ausführungsform ist das Elektrowerkzeug derart ausgestaltet, dass beim Betrieb des Elektrowerkzeugs ein wenigstens teilweise manueller Vorschub durch einen Benutzer vorgesehen ist.

Gemäß einem weiteren Aspekt der Erfindung wird ein Verfahren zum Betreiben eines Elektrowerkzeugsystems angegeben, insbesondere zum Betreiben eines erfindungsgemäßen Elektrowerkzeugsystems, wobei das Elektrowerkzeugsystem ein Elektrowerkzeug und eine separat zu dem Elektrowerkzeug angeordnete Beleuchtungsvorrichtung aufweist. Gemäß dem Verfahren wird abhängig von einem Wert eines Betriebsparameters des Elektrowerkzeugs mittels des Elektrowerkzeugs eine Information betreffend den Wert des Betriebsparameters direkt oder indirekt an die Beleuchtungsvorrichtung übermittelt. Insbesondere wird mittels des Elektrowerkzeugs abhängig von dem Wert des Betriebsparameters ein Sensorsignal erzeugt und abhängig von dem Sensorsignal die Information erzeugt und übermittelt. Mittels der Beleuchtungsvorrichtung wird abhängig von der übermittelten Information eine Vielzahl von Lichtimpulsen erzeugt und emittiert, wobei ein Pulsparameter betreffend eine Impulsdauer der Vielzahl von Lichtimpulsen und/oder eine Frequenz der Vielzahl von Lichtimpulsen und/oder einen Tastgrad der Vielzahl von Lichtimpulsen von dem Wert des Betriebsparameters abhängt und/oder es wird mittels der Beleuchtungsvorrichtung Licht emittiert, wobei eine Lichtintensität des emittierten Lichts von dem Wert des Betriebsparameters abhängt.

Gemäß zumindest einer Ausführungsform des Verfahrens wird die Information betreffend den Wert des Betriebsparameters oder eine weitere Information betreffend den Wert des Betriebsparameters direkt oder indirekt an ein mobiles elektronisches Endgerät übermittelt. Mittels des mobilen elektronischen Endgeräts, insbesondere mittels eines haptischen Aktuators des mobilen elektronischen Endgeräts, wird abhängig von der übermittelten Information oder der übermittelten weiteren Information ein haptisches Ausgabesignal an einen Benutzer ausgegeben.

Bei dem mobilen elektronischen Endgerät kann es sich beispielsweise um ein Mobiltelefon, ein Smartphone, einen Tabletcomputer, einen Laptopcomputer, ein sogenanntes Wearable, eine Smartwatch, ein Fitnessarmband oder dergleichen handeln.

Auf diese Weise wird zusätzlich zu dem visuellen Informationskanal auch ein haptischer Informationskanal genutzt. Der haptische Informationskanal wird vorteilhafterweise nicht direkt über das Elektrowerkzeug realisiert, sondern über das mobile elektronische Endgerät, das der Benutzer beispielsweise direkt am Körper trägt, sodass das haptische Ausgabesignal von dem Benutzer besser von einer Vibration oder Bewegung des Elektrowerkzeugs bei der Bearbeitung des Werkstücks unterschieden werden kann. So kann die Zuverlässigkeit und Effektivität der Informationsübermittlung weiter erhöht werden.

Gemäß zumindest einer Ausführungsform des Verfahrens wird der Wert des Betriebsparameters mit wenigstens einem vorgegebenen Grenzwert verglichen und der Pulsparameter und/oder die Lichtintensität wird abhängig von einem Ergebnis des Vergleichs bestimmt.

Gemäß zumindest einer Ausführungsform des Verfahrens enthält der wenigstens eine vorgegebene Grenzwert des Verfahrens einen ersten Grenzwert, wobei sich der Betriebsparameter in einem vorgegebenen zulässigen Betriebsbereich befindet, wenn, beispielsweise genau dann wenn, der Wert des Betriebsparameters kleiner oder gleich dem ersten Grenzwert ist. Zum Bestimmen des Pulsparameters wird abhängig von einem Ergebnis des Vergleichs ein Wert für die Frequenz der Vielzahl von Lichtimpulsen aus zwei oder mehr vorgegebenen Frequenzwerten ausgewählt. Der ausgewählte Wert für die Frequenz der Vielzahl von Lichtimpulsen ist umso größer, je geringer eine Differenz zwischen dem Wert des Betriebsparameters und dem ersten Grenzwert ist, wenn sich der Betriebsparameter in dem zulässigen Betriebsbereich befindet.

Gemäß zumindest einer Ausführungsform beinhaltet der wenigstens eine vorgegebene Grenzwert einen zweiten Grenzwert, wobei sich der Betriebsparameter in einem vorgegebenen unzulässigen Betriebsbereich befindet, wenn der Wert des Betriebsparameters größer ist als der zweite Grenzwert. Zum Bestimmen des Pulsparameters wird abhängig von einem Ergebnis des Vergleichs ein Wert für die Frequenz der Vielzahl von Lichtimpulsen aus zwei oder mehr vorgegebenen Frequenzwerten ausgewählt. Der ausgewählte Wert für die Frequenz der Vielzahl von Lichtimpulsen ist umso größer, je größer eine Differenz zwischen dem Wert des Betriebsparameters und dem zweiten Grenzwert ist, wenn sich der Betriebsparameter in dem unzulässigen Betriebsbereich befindet.

Gemäß zumindest einer Ausführungsform des Verfahrens wird die Vielzahl von Lichtimpulsen derart erzeugt und emittiert, dass eine Farbe der emittierten Lichtimpulse von dem Wert des Betriebsparameters abhängt.

So kann beispielsweise eine Nähe zum kritischen Zustand durch entsprechende Modifikation der Farbe noch deutlicher zum Ausdruck gebracht werden und somit noch unmittelbarer durch den Benutzer wahrgenommen werden.

Weitere Ausführungsformen des erfindungsgemäßen Verfahrens folgen unmittelbar aus den verschiedenen Ausgestaltungen des erfindungsgemäßen Steuerungssystems und des erfindungsgemäßen Elektrowerkzeugsystems und jeweils umgekehrt. Insbesondere lassen sich einzelne Merkmale und entsprechende Erläuterungen bezüglich der verschiedenen Ausführungsformen zu dem erfindungsgemäßen Steuerungssystem und dem erfindungsgemäßen Elektrowerkzeugsystem analog auf entsprechende Ausführungsformen des erfindungsgemäßen Verfahrens übertragen. Insbesondere ist das erfindungsgemäße Steuerungssystem oder das erfindungsgemäße Elektrowerkzeugsystem zum Durchführen eines erfindungsgemäßen Verfahrens ausgebildet oder programmiert. Insbesondere führt das erfindungsgemäße Steuerungssystem oder das erfindungsgemäße Elektrowerkzeugsystem das erfindungsgemäße Verfahren durch.

Der erste Steuerschaltkreis kann beispielsweise als erste Recheneinheit ausgestaltet sein oder von einer ersten Recheneinheit beinhaltet sein. Der zweite Steuerschaltkreis kann beispielsweise als zweite Recheneinheit ausgestaltet sein oder von einer zweiten Recheneinheit beinhaltet sein.

Unter einer Recheneinheit kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere digitale Signalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DRAM (englisch: "dynamic random access memory") oder statischer Speicher mit wahlfreiem Zugriff, SRAM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCRAM (englisch: "phase-change random access memory"), ausgestaltet sein.

Ist im Rahmen der vorliegenden Offenbarung die Rede davon, dass eine Komponente des erfindungsgemäßen Steuerungssystems oder des erfindungsgemäßen Elektrowerkzeugsystems, insbesondere der erste Steuerschaltkreis, der zweite erste Steuerschaltkreis, die externe Recheneinheit oder eine sonstige Recheneinheit des Steuerungssystems oder des Elektrowerkzeugsystems dazu eingerichtet, ausgebildet, ausgelegt, oder dergleichen ist, eine bestimmte Funktion auszuführen oder zu realisieren, eine bestimmte Wirkung zu erzielen oder einem bestimmten Zweck zu dienen, so kann dies derart verstanden werden, dass die Komponente, über die prinzipielle oder theoretische Verwendbarkeit oder Eignung der Komponente für diese Funktion, Wirkung oder diesen Zweck hinaus, durch eine entsprechende Anpassung, Programmierung, physische Ausgestaltung und so weiter konkret und tatsächlich dazu in der Lage ist, die Funktion auszuführen oder zu realisieren, die Wirkung zu erzielen oder dem Zweck zu dienen.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. Dabei zeigt
- Fig.: eine schematische Darstellung einer beispielhaften Ausführungsform eines erfindungsgemäßen Elektrowerkzeugsystems.

In der Fig. ist schematisch eine beispielhafte Ausführungsform eines erfindungsgemäßen Elektrowerkzeugsystems 1 gezeigt, das ein Elektrowerkzeug 3, rein beispielhaft als Winkelschleifer dargestellt, und eine separat zu dem Elektrowerkzeug 3 angeordnete Beleuchtungsvorrichtung 4, rein beispielhaft als eine LED-Leuchte dargestellt, aufweist. Das Elektrowerkzeugsystem 1 weist eine beispielhafte Ausführungsform eines erfindungsgemäßen Steuerungssystems 2 für das Elektrowerkzeug 3 und die Beleuchtungsvorrichtung 4 auf, das wenigstens teilweise von dem Elektrowerkzeug 3 und der Beleuchtungsvorrichtung 4 beinhaltet ist.

Die Beleuchtungsvorrichtung 4 enthält eine Lichtquelle 15 und beispielsweise ein Akkupack 6 mit Akkumulatorzellen 12, um die Lichtquelle 15 mit elektrischer Energie zu versorgen. Beispielsweise weist das Elektrowerkzeug 3 einen Elektromotor (nicht gezeigt) und ein Akkupack 5 mit Akkumulatorzellen 11 auf, um den Elektromotor mit elektrischer Energie zu versorgen.

Das Steuerungssystem 2 enthält einen ersten Steuerschaltkreis 7 des Elektrowerkzeugs 3, beispielsweise des Akkupacks 5, auf und einen zweiten Steuerschaltkreis 8 der Beleuchtungsvorrichtung 4, beispielsweise des Akkupacks 6. Das Steuerungssystem 2 weist einen Sensor 13 des Elektrowerkzeugs 3 auf, der angeordnet und eingerichtet ist, einen Wert eines Betriebsparameters des Elektrowerkzeugs 3 zu bestimmen oder zu messen und abhängig von dem Wert des Betriebsparameters des Elektrowerkzeugs 3 ein Sensorsignal zu erzeugen.

Der Sensor 13 kann in dem Akkupack 5 angeordnet sein oder außerhalb des Akkupacks 5 in dem Elektrowerkzeug 3. Der Sensor 13 kann beispielsweise als Stromsensor ausgestaltet sein und der Betriebsparameter kann einem Strom von dem Akkupack 5 oder den Akkumulatorzellen 11 zu dem Elektromotor entsprechen. Je nach Ausgestaltung des Elektrowerkzeugs 3 sind auch andere Betriebsparameter und entsprechende Sensoren 13 möglich.

Der erste Steuerschaltkreis 7 ist dazu eingerichtet, abhängig von dem Sensorsignal eine Information betreffend den Wert des Betriebsparameters direkt an den zweiten Steuerschaltkreis 8 zu übermitteln, insbesondere über eine erste Kommunikationsschnittstelle 9 des Elektrowerkzeugs 3, beispielsweise des ersten Steuerschaltkreises 7, und eine zweite Kommunikationsschnittstelle 10 der Beleuchtungsvorrichtung 4. Alternativ kann der erste Steuerschaltkreis 7 abhängig von dem Sensorsignal die Information betreffend den Wert des Betriebsparameters über die erste Kommunikationsschnittstelle 9 an eine externe Recheneinheit 14, insbesondere einen Cloudserver oder dergleichen, des Steuerungssystems 2 übermitteln und die externe Recheneinheit 14 kann die Information betreffend den Wert des Betriebsparameters an die zweite Kommunikationsschnittstelle 10 und damit an den zweiten Steuerschaltkreis 8 übermitteln.

Der zweite Steuerschaltkreis 8 ist dazu eingerichtet, die Lichtquelle 15 der Beleuchtungsvorrichtung 4 abhängig von der übermittelten Information dazu anzusteuern, eine Vielzahl von Lichtimpulsen zu emittieren. Dabei werden die Lichtimpulse gemäß einem Pulsparameter erzeugt und emittiert, der eine Impulsdauer der Vielzahl von Lichtimpulsen und/oder eine Frequenz der Vielzahl von Lichtimpulsen und/oder einen Tastgrad der Vielzahl von Lichtimpulsen betrifft. Der Pulsparameter hängt dabei von dem Wert des Betriebsparameters ab.

Beispielsweise kann die Frequenz der Vielzahl von Lichtimpulsen schrittweise erhöht werden, je näher der Wert des Betriebsparameters einem vorgegebenen Grenzwert kommt, der beispielsweise einen kritischen Betriebszustand definiert.

### BEZUGSZEICHENLISTE:

- 1: Elektrowerkzeugsystem
- 2: Steuerungssystem
- 3: Elektrowerkzeug
- 4: Beleuchtungsvorrichtung
- 5,6: Akkupack
- 7, 8: Steuerschaltkreise
- 9, 10: Kommunikationsschnittstellen
- 11, 12: Akkumulatorzellen
- 13: Sensor
- 14: externe Recheneinheit
- 15: Lichtquelle

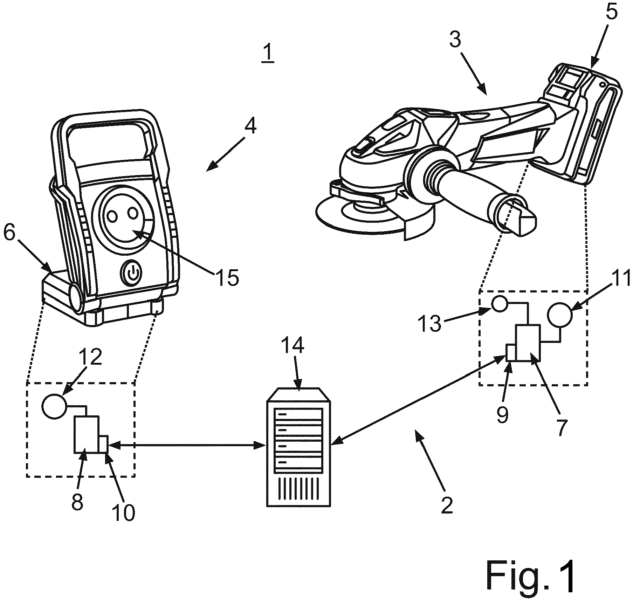

## Patentansprüche

1. Steuerungssystem (2) für ein Elektrowerkzeug (3) und eine separat zu dem Elektrowerkzeug (3) angeordnete Beleuchtungsvorrichtung (4), wobei
- das Steuerungssystem (2) einen ersten Steuerschaltkreis (7) für das Elektrowerkzeug (3) und einen zweiten Steuerschaltkreis (8) für die Beleuchtungsvorrichtung (4) aufweist;
- das Steuerungssystem (2) einen Sensor (13) für das Elektrowerkzeug (3) aufweist, der dazu eingerichtet ist, abhängig von einem Wert eines Betriebsparameters des Elektrowerkzeugs (3) ein Sensorsignal zu erzeugen;
- der erste Steuerschaltkreis (7) dazu eingerichtet ist, abhängig von dem Sensorsignal eine Information betreffend den Wert des Betriebsparameters direkt oder indirekt an den zweiten Steuerschaltkreis (8) zu übermitteln;
- der zweite Steuerschaltkreis (8) dazu eingerichtet ist, eine Lichtquelle (15) der Beleuchtungsvorrichtung (4) abhängig von der übermittelten Information dazu anzusteuern,
i) eine Vielzahl von Lichtimpulsen zu emittieren, wobei ein Pulsparameter betreffend eine Impulsdauer der Vielzahl von Lichtimpulsen und/oder eine Impulsamplitude der Vielzahl von Lichtimpulsen und/oder eine Frequenz der Vielzahl von Lichtimpulsen und/oder einen Tastgrad der Vielzahl von Lichtimpulsen von dem Wert des Betriebsparameters abhängt; oder
ii) einen Lichtimpuls zu emittieren, wobei ein Pulsparameter betreffend eine Impulsdauer und/oder eine Impulsamplitude des Lichtimpulses von dem Wert des Betriebsparameters abhängt; oder
iii) Licht zu emittieren, wobei eine Lichtintensität des emittierten Lichts von dem Wert des Betriebsparameters abhängt.

2. Steuerungssystem (2) nach Anspruch 1, aufweisend eine mit dem ersten Steuerschaltkreis (7) verbundene erste Kommunikationsschnittstelle (9) für das Elektrowerkzeug (3) und eine mit dem zweiten Steuerschaltkreis (8) verbundene zweite Kommunikationsschnittstelle (10) für die Beleuchtungsvorrichtung (4); und
- der erste Steuerschaltkreis (7) dazu eingerichtet ist, die Information über die erste Kommunikationsschnittstelle (9) und die zweite Kommunikationsschnittstelle (10) direkt an den zweiten Steuerschaltkreis (8) zu übermitteln; oder
- das Steuerungssystem (2) eine externe Recheneinheit (14) aufweist und der erste Steuerschaltkreis (7) dazu eingerichtet ist, die Information über die erste Kommunikationsschnittstelle (9) an die externe Recheneinheit (14) zu übermitteln und die externe Recheneinheit (14) dazu eingerichtet ist, die Information über die zweite Kommunikationsschnittstelle (10) an den zweiten Steuerschaltkreis (8) zu übermitteln.

3. Steuerungssystem (2) nach einem der vorhergehenden Ansprüche, wobei der Sensor (13) als Stromsensor ausgestaltet ist, der dazu eingerichtet ist, das Sensorsignal abhängig von einem Betriebsstrom zum Betrieb eines elektrischen Verbrauchers des Elektrowerkzeugs zu erzeugen.

4. Steuerungssystem (2) nach einem der vorhergehenden Ansprüche, aufweisend
- ein erstes Akkupack (5) zur Energieversorgung des Elektrowerkzeugs, wobei das erste Akkupack (5) die erste Steuereinheit enthält; und/oder
- ein zweites Akkupack (6) zur Energieversorgung der Beleuchtungsvorrichtung (4), wobei das zweite Akkupack (6) die zweite Steuereinheit enthält.

5. Steuerungssystem (2) nach einem der vorhergehenden Ansprüche, wobei
- die Information betreffend den Wert des Betriebsparameters den Wert des Betriebsparameters beinhaltet; und
- der zweite Steuerschaltkreis (8) dazu eingerichtet ist, den Pulsparameter und/oder die Lichtintensität abhängig von dem Wert des Betriebsparameters zu bestimmen.

6. Steuerungssystem (2) nach Anspruch 5, wobei der zweite Steuerschaltkreis (8) dazu eingerichtet ist, den Wert des Betriebsparameters mit wenigstens einem vorgegebenen Grenzwert zu vergleichen und den Pulsparameter und/oder die Lichtintensität abhängig von einem Ergebnis des Vergleichs zu bestimmen.

7. Steuerungssystem (2) nach einem der Ansprüche 1 bis 4, wobei
- der erste Steuerschaltkreis (7) dazu eingerichtet ist, den Wert des Betriebsparameters mit wenigstens einem vorgegebenen Grenzwert zu vergleichen und die Information betreffend den Wert des Betriebsparameters ein Ergebnis des Vergleichs beinhaltet; und
- der zweite Steuerschaltkreis (8) dazu eingerichtet ist, den Pulsparameter und/oder die Lichtintensität abhängig von dem Ergebnis des Vergleichs zu bestimmen.

8. Steuerungssystem (2) nach einem der Ansprüche 1 bis 4, wobei
- der erste Steuerschaltkreis (7) dazu eingerichtet ist, den Pulsparameter und/oder die Lichtintensität abhängig von dem Wert für den Betriebsparameter zu bestimmen und die Information betreffend den Wert des Betriebsparameters den Pulsparameter und/oder die Lichtintensität enthält; und
- der zweite Steuerschaltkreis (8) dazu eingerichtet ist, die Lichtquelle (15) gemäß dem Pulsparameter und/oder der Lichtintensität anzusteuern.

9. Elektrowerkzeugsystem (1) aufweisend ein Elektrowerkzeug (3), eine separat zu dem Elektrowerkzeug (3) angeordnete Beleuchtungsvorrichtung (4) sowie ein Steuerungssystem (2) für das Elektrowerkzeug (3) und die Beleuchtungsvorrichtung (4) nach einem der vorhergehenden Ansprüche.

10. Elektrowerkzeugsystem (1) nach Anspruch 9, wobei
- die Beleuchtungsvorrichtung (4) als Beleuchtungsvorrichtung (4) zur Raumbeleuchtung oder Außenbeleuchtung ausgestaltet ist; und/oder
- das Elektrowerkzeug (3) als Elektrowerkzeug (3) zum Trennen, Schleifen oder Bohren ausgestaltet ist; und/oder
- das Elektrowerkzeug (3) derart ausgestaltet ist, dass beim Betrieb des Elektrowerkzeugs (3) ein wenigstens teilweise manueller Vorschub durch einen Benutzer vorgesehen ist.

11. Verfahren zum Betreiben eines Elektrowerkzeugsystems (1) aufweisend ein Elektrowerkzeug (3) und eine separat zu dem Elektrowerkzeug (3) angeordnete Beleuchtungsvorrichtung (4), wobei
- abhängig von einem Wert eines Betriebsparameters des Elektrowerkzeugs (3) mittels des Elektrowerkzeugs eine Information betreffend den Wert des Betriebsparameters direkt oder indirekt an die Beleuchtungsvorrichtung (4) übermittelt wird;
- mittels der Beleuchtungsvorrichtung (4) abhängig der übermittelten Information
i) eine Vielzahl von Lichtimpulsen emittiert wird, wobei ein Pulsparameter betreffend eine Impulsdauer der Vielzahl von Lichtimpulsen und/oder eine Frequenz der Vielzahl von Lichtimpulsen und/oder eine Impulsamplitude der Vielzahl von Lichtimpulsen und/oder einen Tastgrad der Vielzahl von Lichtimpulsen von dem Wert des Betriebsparameters abhängt; oder
ii) ein Lichtimpuls emittiert wird, wobei ein Pulsparameter betreffend eine Impulsdauer und/oder eine Impulsamplitude des Lichtimpulses von dem Wert des Betriebsparameters abhängt; oder
iii) Licht emittiert wird, wobei eine Lichtintensität des emittierten Lichts von dem Wert des Betriebsparameters abhängt.

12. Verfahren nach Anspruch 11, wobei
- die Information betreffend den Wert des Betriebsparameters oder eine weitere Information betreffend den Wert des Betriebsparameters direkt oder indirekt an ein mobiles elektronisches Endgerät übermittelt wird; und
- mittels des mobilen elektronischen Endgeräts abhängig der übermittelten Information oder der übermittelten weiteren Information ein haptisches Ausgabesignal an einen Benutzer ausgegeben wird.

13. Verfahren nach einem der Ansprüche 11 oder 12, wobei der Wert des Betriebsparameters mit wenigstens einem vorgegebenen Grenzwert verglichen wird und der Pulsparameter und/oder die Lichtintensität abhängig von einem Ergebnis des Vergleichs bestimmt wird.

14. Verfahren nach Anspruch 13, wobei
- der wenigstens eine vorgegebene Grenzwert einen ersten Grenzwert enthält, wobei sich der Betriebsparameter in einem vorgegebenen zulässigen Betriebsbereich befindet, wenn der Wert des Betriebsparameters kleiner oder gleich dem ersten Grenzwert ist;
- zum Bestimmen des Pulsparameters abhängig von einem Ergebnis des Vergleichs ein Wert für die Frequenz der Vielzahl von Lichtimpulsen aus zwei oder mehr vorgegebenen Frequenzwerten ausgewählt wird; und
- der ausgewählte Wert für die Frequenz der Vielzahl von Lichtimpulsen umso größer ist, je geringer eine Differenz zwischen dem Wert des Betriebsparameters und dem ersten Grenzwert ist, wenn sich der Betriebsparameter in dem zulässigen Betriebsbereich befindet.

15. Verfahren nach Anspruch 13, wobei
- der wenigstens eine vorgegebene Grenzwert einen zweiten Grenzwert enthält, wobei sich der Betriebsparameter in einem vorgegebenen unzulässigen Betriebsbereich befindet, wenn der Wert des Betriebsparameters größer ist als der zweite Grenzwert;
- zum Bestimmen des Pulsparameters abhängig von einem Ergebnis des Vergleichs ein Wert für die Frequenz der Vielzahl von Lichtimpulsen aus zwei oder mehr vorgegebenen Frequenzwerten ausgewählt wird; und
- der ausgewählte Wert für die Frequenz der Vielzahl von Lichtimpulsen umso größer ist, je größer eine Differenz zwischen dem Wert des Betriebsparameters und dem zweiten Grenzwert ist, wenn sich der Betriebsparameter in dem unzulässigen Betriebsbereich befindet.
